# EUROPÄISCHE PATENTSCHRIFT

(11) **EP 2 558 806 B1**
(45) Veröffentlichungstag und Bekanntmachung des Hinweises auf die Patenterteilung: **17.09.2014**
(21) Anmeldenummer: 12706801.3
(22) Anmeldetag: 21.02.2012
(51) Int. Cl.: F27B 7/20, C04B 7/43, C04B 18/16, C09C 1/02

(54) **VERFAHREN UND ANLAGE ZUM HERSTELLEN VON ZEMENT UND GEFÄLLTEM CALCIUMCARBONAT**
METHOD AND SYSTEM FOR PRODUCING CEMENT AND PRECIPITATED CALCIUM CARBONATE
PROCÉDÉ ET INSTALLATION DE PRODUCTION DE CIMENT ET DE CARBONATE DE CALCIUM PRÉCIPITÉ

(30) Priorität: 05.04.2011 DE 102011001817
(43) Veröffentlichungstag der Anmeldung: 20.02.2013
(73) Patentinhaber: ThyssenKrupp Industrial Solutions AG, 45143 Essen (DE)
(72) Erfinder: KUPPER, Detlev, 48291 Telgte (DE); SAUER, Markus, 58802 Balve (DE)
(74) Vertreter: Tetzner, Michael
(86) Internationale Anmeldenummer: PCT/EP2012/052930
(87) Internationale Veröffentlichungsnummer: WO 2012/136405

(56) Entgegenhaltungen:
- EP-A1- 1 574 487
- DE-A1- 4 442 563
- US-A1- 2004 129 181
- US-B1- 6 331 207

## Beschreibung

Die Erfindung betrifft ein Verfahren und eine Anlage zur Herstellung von Zement und gefälltem Calciumcarbonat.

Für die Herstellung von Zement ist ein hoher Energiebedarf von 720 kcal/kg Klinker erforderlich. Außerdem werden bei der Entsäuerung des Kalksteins große Mengen an CO₂ freigesetzt (0,43kg CO2 pro kg Kalkstein). Um den Energiebedarf und die CO₂-Emissionen zu senken hat man bereits vorgeschlagen, einen Teil des Zementklinkers durch ein energetisch weniger aufwendig herzustellendes Bindemittel zu ersetzen. Diese Substitution ist aber nur in beschränktem Umfang möglicht, damit die gewünschten Abbinde- und Festigkeitseigenschaften des Endproduktes eingehalten werden können.

In der WO 2008/090481 A2 wird vorgeschlagen, einen Teil des Zements durch gefälltes Calciumcarbonat zu ersetzen. Käufliche Präzipitate werden beispielsweise aus Reststoffen der Papierindustrie hergestellt.

Die DE 44 42 563 A1 beschreibt ein Verfahren zur Behandlung und Verwertung von mit Alkalichloriden und -sulfaten angereicherten Bypass-Stäuben aus dem Zementherstellungsprozess. Der Bypass-Staub wird dabei einer wässrigen Extraktion unterworfen, wobei in zwei Extraktionsstufen die Chloride und die leicht löslichen Sulfatanteile abgetrennt werden und der extrahierte Staub nach der Trocknung als Zumahlstoff bei der Zementmahlung eingesetzt wird. In der verbleibenden Sole wird durch Zugabe einer CaCl₂-Lösung Gips ausgefällt. Auch in der EP 1 574 487 A1 werden die sulfatbelasteten Bypass-Stäube einem Wäscher zugeführt, wobei der dabei entstehende Gips einer Zementmahlanlage zugeführt wird.

In der US 2004/0129181 A1 und der US 6 331 207 B1 werden die Bypass-Stäube aus einem Zementherstellungsprozess abgezogen und einer Fällung unterzogen. Das dabei entstehende gefällte Calciumcarbonat wird anschließend als Zementrohmaterial dem Drehrohrofen aufgegeben.

Der Erfindung liegt nun die Aufgabe zugrunde, gefälltes Calciumcarbonat herzustellen, das insbesondere für die Herstellung von Zement geeignet ist. Die Erfindung betrifft ferner eine Anlage zur Herstellung von Zement und gefälltem Calciumcarbonat sowie ein Verfahren zur Herstellung eines Mischzements. Erfindungsgemäß wird diese Aufgabe durch die Merkmale der Ansprüche 1, 7 und 8 gelöst.

Beim erfindungsgemäßen Verfahren wird gefälltes Calciumcarbonat unter Verwendung von vorgewärmtem und ggf. vorcalciniertem Zementrohmehl aus einem Zementherstellungsprozess hergestellt, wobei Zementrohmehl in einem Vorwärmer vorgewärmt, dann ggf. vorcalcinert und anschließend in einem Ofen fertiggebrannt wird, und wobei ein Teil des vorgewärmten und ggf. vorcalcinierten Zementrohmehls vor dem Ofen ausgeschleust und einer Fällung zur Ausscheidung von Calciumcarbonat unterzogen wird.

Beim erfindungsgemäßen Verfahren zur Herstellung eines Mischzements wird zumindest ein Teil des auf diese Art gefällten Calciumcarbonats mit dem Zementklinker oder einem weiterverarbeiteten Zementklinker vermischt.

Die erfindungsgemäße Anlage zur Herstellung von Zement und gefälltem Calciumcarbonat besteht im Wesentlichen aus
a. einem Vorwärmer zum Vorwärmen von Zementrohmehl,
b. ggf. einem Calcinator zum Vorcalcinieren von vorgewärmtem Zementrohmehl,
c. einem Ofen zum Brennen des Zementrohmehls zu Zementklinker,
d. einer vor dem Ofen abzweigenden Bypassleitung zum Abziehen eines Teils des vorgewärmten und ggf. vorcalcinierten Zementrohmehls und
e. einem an die Bypassleitung angeschlossenen Fällungsaggregat zur Herstellung von gefälltem Calciumcarbonat.

Bei den der Erfindung zugrundeliegenden Versuchen hat sich gezeigt, dass vorgewärmtes und ggf. vorcalciniertes Zementrohmehl als Ausgangstoff für die Fällung vor allem dann besonders geeignet ist, wenn das gefällte Calciumcarbonat mit dem Zementklinker oder einem weiterverarbeiteten Zementklinker vermischt wird. Es hat sich nämlich herausgestellt, dass sich die Festigkeit des Endproduktes hierdurch nicht nennenswert verschlechtern. Es ist unter Umständen sogar mit einer Erhöhung der Festigkeit zu rechnen.

Weitere Ausgestaltungen der Erfindung sind Gegenstand der Unteransprüche.

Gemäß einem bevorzugten Ausführungsbeispiel der Erfindung erfolgt die Fällung durch Einleiten von Kohlenstoffdioxid in eine das vorgewärmte und ggf. vorcalcinierte Zementrohmehl enthaltende Flüssigkeit. Die Fällung wird zweckmäßigerweise so eingestellt, das Kornfraktionen oder Korngrößen oder Kornbänder eine Größenordnung von 0,5 µm bis 100 µm bevorzugt werden. Das ausgeschleuste heiße Zementrohmehl wird zweckmäßigerweise vor der Fällung auf unter 850°C abgekühlt, wobei die dabei entstehende Wärme im Zementherstellungsprozess oder zur Trocknung des Präzipitäts verwendet werden kann. Es hat sich dabei als vorteilhaft herausgestellt, wenn die Fällung bei Temperaturen oberhalb von 5°C, insbesondere im Bereich von 30 bis 80°C durchgeführt wird.

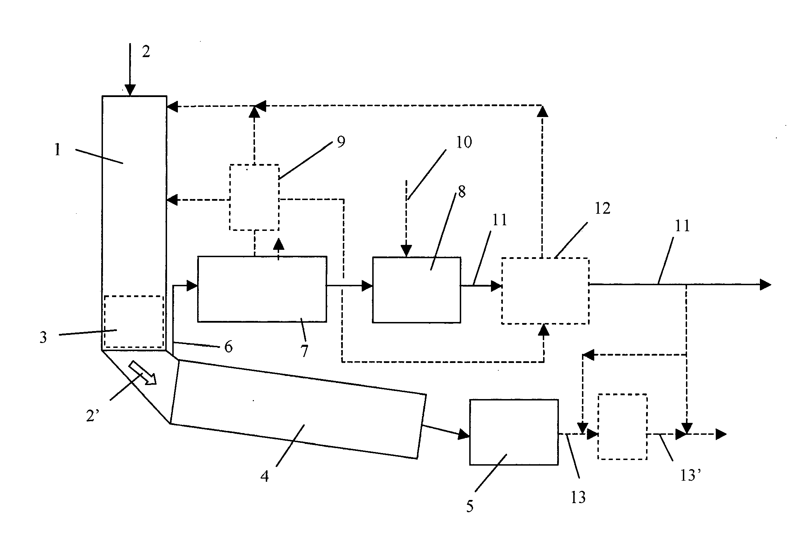

Weitere Vorteile und Ausgestaltung der Erfindung werden im Folgenden anhand der weiteren Beschreibung und der Zeichnung näher erläutert.

Die Zeichnung zeigt eine schematische Ansicht einer Anlage zur Herstellung von Zement und gefälltem Calciumcarbonat. Sie besteht im Wesentlichen aus einem Vorwärmer 1 zum Vorwärmen von Zementrohmehl 2, ggf. einem Calcinator 3 zum Vorcalcinieren des vorgewärmten Zementrohmehls, einem Ofen 4 zum Brennen des Zementrohmehls zu Zementklinker und einem Kühler 5. Der Vorwärmer 1 ist beispielsweise als Schwebegaswärmetauscher mit mehreren, übereinander angeordneten Stufen ausgebildet, der vom Abgas des Ofens 4 im Gegenstrom zum Zementrohmehl 2 durchströmt wird. Vor dem Ofen 4 zeigt eine Bypassleitung 6 ab, an die unter Zwischenschaltung einer Kühleinrichtung 7 ein Fällungsaggregat 8 zur Herstellung von gefälltem Calciumcarbonat angeschlossen ist.

In der Kühleinrichtung 7 wird das abgezweigte, vorgewärmte und ggf. vorcalcinierte Zementrohmehl 2' auf Temperaturen unter 850°C, insbesondere auf Temperaturen in einem Bereich von 30-80°C abgekühlt. Hierfür eignet sich insbesondere ein Flugstromverfahren. Die dabei entstehende Wärme kann entweder direkt oder indirekt über einen Wärmetauscher 9 dem Zementherstellungsprozess, insbesondere dem Vorwärmer 1, zurückgeführt werden. Alternativ ist die Trocknung des Präzipitats denkbar.

Für die Fällung im Fällungsaggregat 8 wird üblicherweise Wasser als Flüssigkeit verwendet, sodass sich zusammen mit dem Zementrohmehl 2' eine Kalkmilch (Calciumhydroxid) bildet, in die Kohlendioxid eingeleitet wird, sodass gefälltes Calicumcarbonat 11 entsteht

Über verschiedene Parameter, wie Temperatur, Verweildauer und Konzentration der Kalkmilch, können, je nach gewünschtem Endprodukt, unterschiedliche Kristallmodifikationen erzeugt werden. Soll das gefällte Calicumcarbonat 11 als Bestandteil in einem Mischzement verwendet werden, hat es sich als vorteilhaft für die Festigkeit des Endproduktes herausgestellt Auch ist es vorteilhaft, wenn bei der Fällung Kornfraktionen oder Korngrößen oder Kornbänder in der Größenordnung von 0,5 µm bis 100 µm erzeugt werden.

Neben dem Zementrohmehl können außerdem zusätzliche calciumhaltige Abfallstoffe 10 dem Fällungsaggregat 8 zugeführt werden. Die im gefällten Calciumcarbonat 11 enthaltene Wärme kann über eine Wärmerekuperationsstufe 12 rekuperiert und im Zementherstellungsprozess, beispielsweise im Vorwärmer 1 oder bei einer etwa erforderlichen Trocknung oder Erwärmung der Abfallstoffe 10 verwendet werden.

Das gefällte Calicumcarbonat 11 kann für alternative Geschäftsfelder, wie beispielsweise in der Papierindustrie, Anwendung finden. Vorzugsweise wird das es jedoch als Zusatzstoff für Zement oder Weißzement eingesetzt. In diesem Fall steht das Fällungsaggregat 8 mit einen sich an dem Ofen 4 bzw. den Kühler 5 anschließenden weiteren Prozessstrang in Verbindung. Hierbei wird das gefällte Calciumcarbonat 11 beispielsweise direkt mit dem gekühlten Zementklinker 13 oder einem weiterverarbeiteten Zementklinker 13' vermischt.

## Patentansprüche

1. Verfahren zum Herstellen von gefälltem Calciumcarbonat (11) unter Verwendung von vorgewärmtem und ggf. vorcalciniertem Zementrohmehl (2') aus einem Zementherstellungsprozess, wobei das Zementrohmehl (2) in einem Vorwärmer (1) vorgewärmt, dann ggf. wenigstens teilweise vorcalciniert und anschließend in einem Ofen (4) fertig gebrannt wird, und wobei ein Teil des vorgewärmten und ggf. vorcalcinierten Zementrohmehls (2') vor dem Ofen (4) ausgeschleust und einer Fällung zur Ausscheidung von Calciumcarbonat (11) unterzogen wird.

2. Verfahren nach Anspruch 1, **dadurch gekennzeichnet, dass** die Fällung durch Einleiten von Kohlenstoffdioxid in eine das vorgewärmte und ggf. wenigstens teilweise vorcalcinierte Zementrohmehl (2') enthaltende Flüssigkeit erfolgt.

3. Verfahren nach Anspruch 1, **dadurch gekennzeichnet, dass** bei der Fällung Kornfraktionen oder Korngrößen oder Kornbänder in der Größenordnung von 0,5 µm bis 100 µm erzeugt werden.

4. Verfahren nach Anspruch 1, **dadurch gekennzeichnet, dass** die Fällung bei Temperaturen oberhalb von 5°C durchgeführt wird.

5. Verfahren nach Anspruch 1, **dadurch gekennzeichnet, dass** das ausgeschleuste Zementrohmehl vor der Fällung gekühlt wird, wobei die dabei entstehende Wärme im Zementherstellungsprozess und/oder zur Trocknung des Präzipitats verwendet wird.

6. Verfahren nach Anspruch 1, **dadurch gekennzeichnet, dass** das ausgeschleuste Zementrohmehl vor der Fällung auf unter 850°C abgekühlt wird.

7. Verfahren zur Herstellung eines Mischzements, wobei Zementrohmchl (2) in einem Vorwärmer (1) vorgewärmt, dann ggf. in einem Calcinator (3) wenigstens teilweise vorcalciniert und anschließend in einem Ofen (4) zu Zementklinker (13) gebrannt wird,
**dadurch gekennzeichnet, dass** ein Teil des vorgewärmten und ggf. wenigstens teilweise vorcalcinierten Zementrohmehls vor dem Ofen (4) ausgeschleust und einer Fällung zur Herstellung von gefälltem Calciumcarbonat (11) unterzogen wird und wobei zumindest ein Teil des gefällten Calciumcarbonats mit dem Zementklinker (13) oder einem weiterverarbeiteten Zementklinker (13') vermischt wird.

8. Anlage zur Herstellung von Zement und zur Herstellung von gefälltem Calciumcarbonat gemäß dem Verfahren nach Anspruch 1 mit
a. einem Vorwärmer (1) zum Vorwärmen von Zementrohmehl (2),
b. ggf. einem Calcinator (3) zum wenigstens teilweisen Vorcalcinieren von vorgewärmtem Zementrohmehl,
c. einem Ofen (4) zum Brennen des Zementrohmehls zu Zementklinker,
d. einer vor dem Ofen (4) abzweigenden Bypassleitung (6) zum Abziehen eines Teils des vorgewärmten und ggf. wenigstens teilweise vorcalcinierten Zementrohmehls (2') und
e. einem an die Bypassleitung (6) angeschlossenen Fällungsaggregat (8) zur Herstellung von gefälltem Calciumcarbonat (11).

9. Anlage nach Anspruch 8, **dadurch gekennzeichnet, dass** sich an den Ofen (4) ein weiterer Prozessstrang anschließt und das Fällungsaggregat (8) zur Vermischung wenigstens eines Teils des gefällten Calciumcarbonats (11) mit dem Zementklinker (13) oder einem weiterverarbeiteten Zementklinker (13') mit dem weiteren Prozessstrang in Verbindung steht.

## Claims

1. Method for producing precipitated calcium carbonate (11) using preheated and optionally precalcined cement raw meal (2') from a cement production process, wherein the cement raw meal (2) is preheated in a preheater (1), then optionally at least partially precalcined and subsequently finish-fired in a furnace (4), and wherein part of the preheated and optionally precalcined cement raw meal (2') is discharged upstream of the furnace (4) and subjected to precipitation in order to separate calcium carbonate (11).

2. Method according to claim 1, **characterised in that** the precipitation is carried out by passing carbon dioxide into a liquid containing the preheated and optionally at least partially precalcined cement raw meal (2').

3. Method according to claim 1, **characterised in that** grain size fractions or grain sizes or grain size bands of approximately from 0.5 µm to 100 µm are produced in the precipitation.

4. Method according to claim 1, **characterised in that** the precipitation is carried out at temperatures above 5°C.

5. Method according to claim 1, **characterised in that** the discharged cement raw meal is cooled before the precipitation, the heat thereby formed being used in the cement production process and/or for drying the precipitate.

6. Method according to claim 1, **characterised in that** the discharged cement raw meal is cooled to below 850°C before the precipitation.

7. Method for producing a mixed cement, wherein cement raw meal (2) is preheated in a preheater (1), then optionally at least partially precalcined in a calciner (3) and subsequently fired in a furnace (4) to form cement clinker (13),
**characterised in that** part of the preheated and optionally at least partially precalcined cement raw meal is discharged upstream of the furnace (4) and subjected to precipitation in order to produce precipitated calcium carbonate (11), and wherein at least part of the precipitated calcium carbonate is mixed with the cement clinker (13) or a further processed cement clinker (13').

8. System for producing cement and for producing precipitated calcium carbonate by the method according to claim 1, having
a. a preheater (1) for preheating cement raw meal (2),
b. optionally a calciner (3) for at least partially precalcining preheated cement raw meal,
c. a furnace (4) for firing the cement raw meal to form cement clinker,
d. a bypass line (6) which branches off upstream of the furnace (4) for drawing off part of the preheated and optionally at least partially precalcined cement raw meal (2'), and
e. a precipitation unit (8) connected to the bypass line (6) for producing precipitated calcium carbonate (11).

9. System according to claim 8, **characterised in that** the furnace (4) is followed by a further process chain, and the precipitation unit (8) is connected to the further process chain for mixing at least part of the precipitated calcium carbonate (11) with the cement clinker (13) or a further processed cement clinker (13').

## Revendications

1. Procédé de production de carbonate de calcium précipité (11) en utilisant de la farine de ciment crue préchauffée et, le cas échéant précalcinée (2') au cours d'un processus de fabrication de ciment, sachant que la farine de ciment crue (2) est préchauffée dans un dispositif de préchauffage (1), puis, le cas échéant, précalcinée au moins partiellement et ensuite soumise à la cuisson finale dans un four (4), et sachant qu'une partie de la farine de ciment crue préchauffée et, le cas échéant précalcinée (2') est évacuée avant le four (4), et est soumise à une précipitation pour séparer le carbonate de calcium (11).

2. Procédé selon la revendication 1, **caractérisé en ce que** la précipitation est effectuée par l'introduction de dioxyde de carbone dans un liquide contenant la farine de ciment crue préchauffée et, le cas échéant, au moins partiellement précalcinée (2').

3. Procédé selon la revendication 1, **caractérisé en ce que** des fractions granulométriques ou des granulométries ou des plages de granulométrie d'un ordre de grandeur de 0,5 µm à 100 µm sont obtenus lors de la précipitation.

4. Procédé selon la revendication 1, **caractérisé en ce que** la précipitation est effectuée à une température supérieure à 5°C.

5. Procédé selon la revendication 1, **caractérisé en ce que** la farine de ciment crue (2) évacuée est refroidie avant la précipitation, sachant que la chaleur en résultant est utilisée pour le processus de production de ciment et / ou pour le séchage du précipité.

6. Procédé selon la revendication 1, **caractérisé en ce que** la farine de ciment crue évacuée est refroidie, avant la précipitation, à une température inférieure à 850 °C.

7. Procédé de production d'un ciment mixte, sachant que la farine de ciment crue (2) est préchauffée dans un dispositif de préchauffage (1), puis, le cas échéant, précalcinée, au moins partiellement, dans un calcinateur (3) et cuite ensuite dans un four (4) pour l'obtention d'un clinker de ciment (13), **caractérisé en ce qu'**une partie de la farine de ciment crue préchauffée et, le cas échéant, au moins partiellement précalcinée est expulsée avant le four (4) et soumise à une précipitation pour l'obtention de carbonate de calcium précipité (11), et sachant qu'au moins une partie du carbonate de calcium précipité est mélangée avec le clinker de ciment (13) ou un clinker de ciment ayant subi un traitement supplémentaire (13').

8. Installation de production de ciment et de production de carbonate de calcium précipité selon le procédé de la revendication 1, qui comprend
a) un dispositif de préchauffage (1) pour le préchauffage de la farine de ciment crue (2),
b) le cas échéant, un calcinateur (3) pour la précalcination au moins partielle de la farine de ciment crue préchauffée,
c) un four (4) pour la cuisson de la farine de ciment crue (2) en clinker de ciment,
d) une conduite de dérivation (6) avant le four (4) pour le prélèvement d'une partie de la farine de ciment crue préchauffée et, le cas échéant, au moins partiellement précalcinée (2'), et
e) une unité de précipitation (8) raccordée à la conduite de dérivation (6) pour la production de carbonate de calcium précipité (11).

9. Installation selon la revendication 8, **caractérisée en ce qu**'une autre ligne de traitement fait suite au four (4), et que l'unité de précipitation (8) est reliée à l'autre ligne de traitement pour le mélange d'au moins une partie du carbonate de calcium précipité (11) avec le clinker de ciment (13) ou un clinker de ciment ayant subi un traitement supplémentaire (13').
